# EUROPÄISCHE PATENTANMELDUNG

(11) **EP 1 437 670 A1**
(43) Veröffentlichungstag der Anmeldung: **14.07.2004**
(21) Anmeldenummer: 03103997.7
(22) Anmeldetag: 28.10.2003
(51) Int. Cl.: G06F 17/60, H04L 12/14

(54) **Verfahren und Vorrichtung zum Bezahlen von Diensten in Netzen bei einer Einmal-Anmeldung (single sign on)**

(30) Priorität: 09.01.2003 DE 10300515
(71) Anmelder: SIEMENS AKTIENGESELLSCHAFT, 80333 München (DE)
(72) Erfinder: Barmard, Dieter, 81475, München (DE); Lehmann, Jens, 14612, Falkensee (DE); Ryll, Frank, 13156, Berlin (DE)

(57) **Zusammenfassung**

Ein Mobilfunk-Netzbetreiber (MNO) agiert als sogenannter Identity-Provider für seinen Endkunden gegenüber externen Anbietern (3rd Party ASP) von mobilen Diensten und Inhalten. Er kann so auch den Bezahlvorgang dieser Inhalte und Dienste übernehmen. Während der bei dem Einmal-Anmeldevorgang (Single Sign On) stattfindenden Authentifizierung und ggf. Autorisierung findet bereits eine Guthaben- bzw. Kreditprüfung statt. Damit ist der Mobilfunk-Netzbetreiber in der Lage, diese Funktionen zu integrieren.

## Beschreibung

### Fachgebiet der Erfindung

Um in einem Netz, sei es ein Mobilfunk- oder auch das Internet - tätig sein zu können, ist es erforderlich, dass ein Nutzer eine oder mehrere Netz-Identität(en) (auch Account(s)) erhält. Eine solche Netz-ID umfasst Angaben über Nutzer-Kennung, Passwort, Adressen, Kredit-Karten Nummern, und gegebenenfalls auch Nutzer-Profile, wie "Bookmarks", Einstellungen, Präferenzen, etc..Bislang ist es üblich, dass sich ein Nutzer eines Kommunikationsnetzes für jede Anwendung, die er nutzen will, separat anmelden muss, da diese Anwendungen in der Regel getrennt voneinander ablaufen. Dieses ist vor allem erforderlich, wenn diese Anwendung eine Authentifizierung oder Autorisierung verlangt. Mit wachsender Zahl von Anwendungen, die ein Nutzer verwenden will, steigt so auch die Anzahl solcher Nutzer-Profile, die er zu verwalten hat. Es ergeben sich also offensichtlich Nachteile, denn der Nutzer muss sich jedes Profil merken, gegebenenfalls Nutzerkennung und Passwort und gegebenenfalls weitere Informationen die er in dem jeweiligen Profil angegeben hat, oder auch nicht angegeben hat.

### Stand der Technik

Inzwischen gibt es für dieses Problem verschiedene Lösungen: beispielsweise der "Passport" Dienst der Firma Microsoft oder das "Liberty Alliance Project" (LAP) (www.projectliberty.org), das im September 2001 ins Leben gerufen wurde.

In den Spezifikationen des Liberty Alliance Projekts werden verschiedene Verfahren der Authentifizierung und Autorisierung (A&A) beschrieben, mit dem Ziel, einen Einmal-Anmeldevorgang, ein sogenanntes "Single Sign-On" (SSO) Verfahren, für den Endnutzer anzubieten.
Eine herstellerunabhängige Einführung über "Single Sign-On" findet man z. B. auch unter:
www.opengroup.org/security/sso/sso_intro.htm.

Solche Single-Sign On Verfahren umfassen bislang keine integrierte Lösung für das Bezahlen von Diensten und/oder Inhalten, der Zahlungsvorgang wird nach dem Sign-On Vorgang separat abgewickelt, beispielsweise über die angegebene Kredit Karte.

In "Charging, Billing and Payment views on 3G Business Models", UMTS Forum Report No. 21, 2002 (www.umts-forum.org/reports.html) vom 21.07.2002 wurde diese Lücke bereits angesprochen, doch es wurde dort keine Lösung dieses Problems vorgestellt.

In Mobilfunknetzen existieren weiterhin einige eingeschränkte Lösungen für die Bezahlung von externen Diensten und Inhalten im Zusammenhang von PrePaid Services:
Eine Abwicklung ist beispielsweise möglich über einen Guthaben ("Wallet") Server beim Mobilfunk-Netzbetreiber, über den zuvor eine explizite Authentifizierung und Autorisierung des Benutzers durchgeführt wird. Diese Lösung ist allerdings teuer und nur für größere Transaktionswerte geeignet.

Die Abrechnung des Inhaltes kann auch indirekt über die Transport-Gebühren (z. B. über eine bekannte "0900"-Nummer) erfolgen. Diese Lösung ist für den Nutzer wenig transparent (d. h. die verrechneten Gebühren für den Inhalt sind von denen für die Verbindung nicht trennbar und damit nicht nachvollziehbar). Diese Lösung wurde in der letzten Zeit von unseriösen Anbieter mißbraucht und ist daher inzwischen in Verruf geraten.Der externe Anbieter kann die Preisinformationen bei der Auslieferung des Dienstes in den Datenstrom einfügen. Diese wird dann vom Mobilfunk-Netzbetreiber aufgefangen und ausgewertet. Das Kostenrisiko liegt hier aber beim Anbieter, da bei mangelnder Zahlungsdeckung des Nutzers der Dienst bereits erbracht war.

Aufgabe der Erfindung ist es, ein verbessertes Verfahren zur Bezahlung von Inhalten und Diensten anzugeben, sowie eine Vorrichtung zur Durchführung des Verfahrens.

### Darstellung der Erfindung

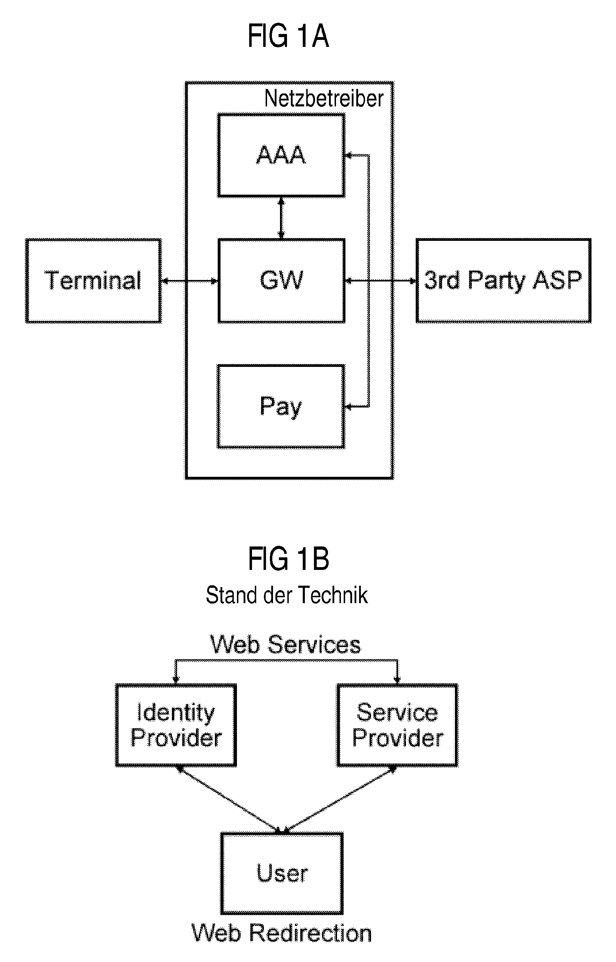

Diese Aufgabe wird gelöst indem ein Mobilfunk-Netzbetreiber (MNO) als sogenannter Identity-Provider (z.B. gemäß der Liberty Alliance Architektur (siehe Figur 1b)) für seinen Endkunden gegenüber externen Anbietern (3rd Party ASP) von mobilen Diensten und Inhalten agiert und auch den Bezahlvorgang dieser Inhalte und Dienste übernimmt. Damit ist der Mobilfunk-Netzbetreiber in der Lage, diese Funktionen zu integrieren.

Während der bei dem Einmal-Anmeldevorgang (Single Sign On) stattfindenden Authentifizierung und ggf. Autorisierung findet bereits eine Guthaben- bzw. Kreditprüfung statt. Das Ergebnis wird dem externen Anbieter mitgeteilt, so dass gegebenenfalls eine Autorisierung mangels ausreichender Deckung für die Nutzung eines Dienstes bereits im Vorfeld versagt werden kann. Dies ist z. B. der Fall, wenn das vorhandene Guthaben des Nutzers geringer ist als die Mindest-Nutzungsgebühr des Dienstes.

Vorteilhafte Ausgestaltungen und Weiterbildungen sind in den Unteransprüchen angegeben.

Bisherige Zahlungsverfahren sehen eine Reservierung bzw. Zahlung des Dienstes erst nach Auswahl bzw. Nutzung vor.Bei dem erfindungsgemäßen Vorgehen kann eine verbindliche Reservierung des Betrages bereits vor der Nutzung geschehen:
Das hier beschriebene Verfahren verknüpft die Authentifizierung des Benutzers mit der Autorisierung und Reservierung des Betrages, bevor der Dienst in Anspruch genommen wird. Der externe Dienstanbieter muss die Auslieferung des Dienstes, für die der Betrag reserviert wurde, an den Mobilfunk-Netzbetreiber innerhalb eines zu bestimmenden Zeitraumes bestätigen. Wahlweise kann der Betrag auch nicht reserviert, sondern dem externen Dienstanbieter nur ein unverbindlicher Hinweis über die vorhandene Deckung der Summe gegeben werden.

Durch die Erfindung wird die Vermarktung von Datendiensten im Umfeld immer weiterer verschiedener Anbieter vereinfacht.

Die im Dialog durchgeführte Online-Autorisierung (auch "Advice-of-Charge", AoC genannt) und die Online-Reservierung wird mit der Online-Authentifizierung verknüpft und dem Mobilfunk-Netzbetreiber überlassen. Der externe Dienstanbieter ist somit um diese Funktion entlastet und muss nur die erfolgreiche Auslieferung des Dienstes bestätigen.

Die Online-Autorisierung wird vom Mobilfunk-Netzbetreiber (als vertrauenswürdiger Partei, auch "trusted party" genannt) erbracht und nicht vom Diensterbringer. Dieses Vertrauensverhältnis kann ausschlaggebend sein für den Erfolg des Dienstes, da der Nutzer direkt immer nur mit dem eigenen Mobilfunk-Netzbetreiber zu tun hat.

Die in der Beschreibung vorgenommene Trennung zwischen Mobilfunk-Netzbetreiber und Diensterbringer (Service Provider) muss aber nicht bedeuten, dass dieses räumlich oder juristisch getrennte Einheiten sind. Diese Unterscheidung dient lediglich der besseren Verständlichkeit und erfolgt in Anlehnung an die Terminologie des Liberty Alliance Projektes. Andere Anordnungen sind dem Fachmann geläufig.

### Kurzbeschreibung der Zeichungen

Figur 1a ist eine Darstellung der vom Verfahren betroffenen Netzelemente,
Figur 1b ist eine Übersicht über die Liberty Architektur, Figur 2 zeigt ein Datenfluss-Diagramm.

Figur 1a zeigt eine Architektur auf der die Durchführung des erfindungsgemäßen Verfahrens möglich ist. Die Kommunikation zwischen einem Nutzer (Terminal), dem Mobilfunk-Netzbetreiber (MNO), der einen Authentifizierungs-Server (AAA Server), einen Gateway (z.B. WAP/Web Proxy), und einen Zahlungsserver (Payment Server) beinhaltet, und einem Diensterbringer (3rd Party Appl. Server) auf der anderen Seite.
Figur 1b zeigt die bekannte Architektur des Liberty Alliance Projektes, wie sie derzeit in den offiziellen Spezifikationen dargelegt ist.
Der Nutzer (user) steht dabei zwei weiteren Netzelementen gegenüber: Der Service Provider bietet die vom Nutzer angeforderten Dienste (Web Services) an. Die Authentifizierung des Nutzers erfolgt zuvor als Single Sign-On bei einem Identity Provider.

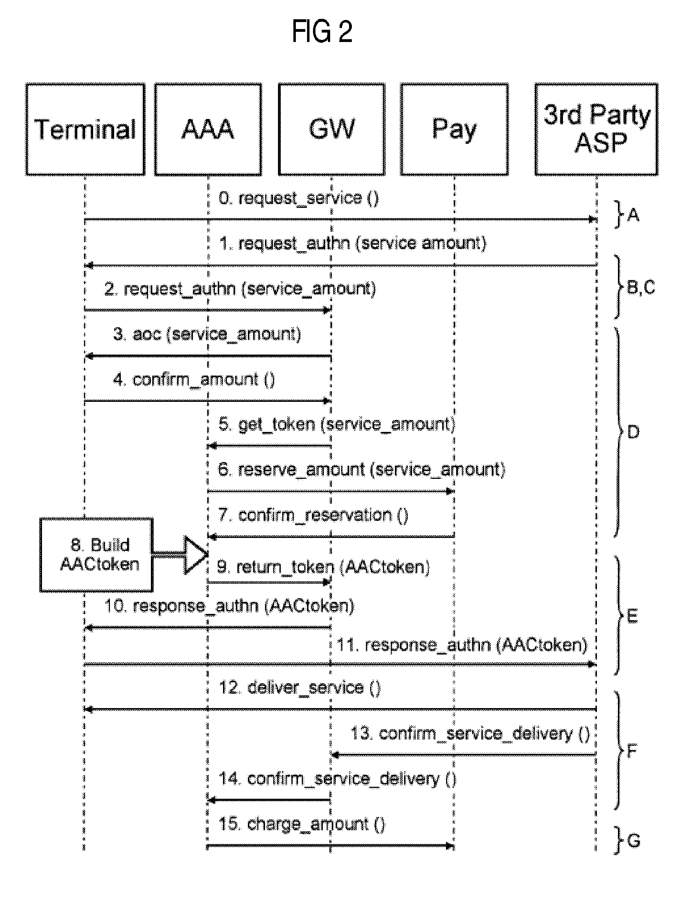

Das ausgeführte Datenfluss-Diagramm der Figur 2 zeigt beispielhaft, wie das hier beschriebene Verfahren durchgeführt werden kann.
Dabei können folgende Schritte durchlaufen werden:
A. Der Nutzer fordert einen Dienst vom Diensterbringer über das Mobilfunknetz des Netzbetreibers an (request_service(), 0.).
B. Der Diensterbringer richtet eine Authentisierungs-Anfrage (request_authn(service_amount), 1.) an den Mobilfunk-Netzbetreiber, der für den Nutzer agiert.
C. Die Authentisierungsnachfrage (request_authn(service_amount), 2.) wird dann mit Hilfe einer Redirect Anfrage über das Terminal des Nutzers zum Mobilfunk-Netzbetreiber gesendet, wie hier dargestellt.
C. Alternativ kann die Authentisierungsnachfrage (request_authn(service_amount)) entsprechend der LAP Spezifikation direkt an den Mobilfunk-Netzbetreiber geschickt werden.
D. Die Authentisierungsanfrage enthält die Preisinformation zum nachgefragten Dienst (service_amount). Diese Information wird vom Mobilfunk-Netzbetreiber genutzt, um den entsprechenden Betrag vom Konto des Nutzers zu reservieren (reserve_amount (service_amount), 6.).
E. Nach der erfolgreichen Reservierung (confirm_reservation(), 7.) sendet der Mobilfunk-Netzbetreiber die notwendigen nutzer- und dienstspezifischen Authentisierungs- und Autorisierungsinformationen (return_token (AACtoken), 9., response_authn(AACtoken), 10.) zusammen mit der Information über die erfolgte Reservierung an den Diensterbringer (ASP), response_authn (AACtoken), 11.).
F. Der Diensterbringer stellt daraufhin den Dienst für den Nutzer bereit (deliver_service(), 12.) und informiert den Mobilfunk-Netzbetreiber über die erfolgte Lieferung (confirm_service_delivery(), 13., 14.).
G. Der Mobilfunk-Netzbetreiber bucht nach Erhalt der Lieferbestätigung den vorab reservierten Betrag vom Konto des Nutzers ab (charge_amount(), 15.).Die Reservierung erfolgt also zusammen mit der Authentisierung und Autorisierung des Nutzers und vor der Bereitstellung des Dienstes durch den Diensterbringer. Optional kann der Mobilfunk-Netzbetreiber vor der Reservierung des Betrages noch eine Autorisierung (AoC) durch den Nutzer ermöglichen. (aoc (service_amount, 3., confirm_amount(), 4.)

## Patentansprüche

**1.** Verfahren zur Vergebührung von Diensten oder Inhalten in einem Kommunikationsnetz (MNO)
a) bei dem der Nutzer (Terminal) sich zuvor im Netz einmalig angemeldet hat und
b) der Nutzer (Terminal) dann bei einem Diensteanbieter (ASP) einen Dienst oder einen Inhalt anfordert (request_service()), und
c) im Netz nach Aufforderung des Dienstanbieters (request_authn(service_amount)) überprüft wird, ob eine ordnungsgemäße Vergebührung des Nutzers für den Dienstanbieter (ASP) möglich ist (reserve_amount(service_amount)), und
d) nach Überprüfung die Ausführung des Dienstes freigegeben wird (response_authn(AACtoken)).

**2.** Verfahren nach Patentanspruch 1, **dadurch gekennzeichnet**, dassc') eine verbindliche Reservierung des Betrages (service_amount) für den externen Dienstanbieter (ASP) stattfindet (confirm_reservation()).

**3.** Verfahren nach Patentanspruch 1, **dadurch gekennzeichnet**, dassc'') ein unverbindlicher Hinweis über eine erfolgreiche Überprüfung der Vergebührung an den externen Diensterbringer erfolgt.

**4.** Verfahren nach einem der vorigen Patentansprüche,**dadurch gekennzeichnet**, dassder externe Diensterbringer die Auslieferung des Dienstes oder Inhaltes bestätigen muss (confirm_service_delivery()).

**5.** Verfahren nach Patentanspruch 4,**dadurch gekennzeichnet**, dassdie Bestätigung der Auslieferung des Dienstes innerhalb eines vorbestimmten Zeitraumes eingehen muss.6. Verfahren nach einem der vorigen Patentansprüche,**dadurch gekennzeichnet**, dassder Nutzer den für den Dienst reservierten Betrag (service_amount) autorisieren kann (confirm_amount()).

**7.** Vorrichtung in einem Kommunikationsnetz (MNO) zur Durchführung des Verfahrens gemäß Patentanspruch 1, mit
- Mitteln zur Authentifizierung und Autorisierung (AAA),
- Mitteln zur Durchführung der Bezahlung (Pay), und
- Mitteln zur Kommunikation mit dem Nutzer (Terminal) und externen Diensteanbietern (3^{rd} Party ASP),
dem der Nutzer (Terminal) sich zuvor im Netz einmalig angemeldet hat und
von dem Nutzer (Terminal) dann über die Mittel zur Kommunikation bei einem Diensteanbieter (ASP) ein Dienst oder einen Inhalt anforderbar ist und
durch die Mittel zur Authentifizierung und Autorisierung (AAA) nach Aufforderung des Dienstanbieters
(request_authn(service_amount)) überprüft wird, ob eine ordnungsgemäße Vergebührung des Nutzers für den Dienstanbieter (ASP) möglich ist.
